# EUROPÄISCHE PATENTSCHRIFT

(11) **EP 2 208 908 B1**
(45) Veröffentlichungstag und Bekanntmachung des Hinweises auf die Patenterteilung: **22.02.2012**
(21) Anmeldenummer: 09180803.0
(22) Anmeldetag: 28.12.2009
(51) Int. Cl.: F16D 65/12, F16D 65/847

(54) **Bremsscheibe**
Brake disc
Disque de frein

(30) Priorität: 14.01.2009 DE 102009000196
(43) Veröffentlichungstag der Anmeldung: 21.07.2010
(73) Patentinhaber: Robert Bosch GmbH, 70442 Stuttgart (DE)
(72) Erfinder: Holzschuh, Ralph, 75242, Neuhausen (DE); Leonhardt, Matthias, 70191, Stuttgart (DE)

(56) Entgegenhaltungen:
- EP-A1- 2 065 610
- DE-A1-102008 016 037
- FR-A1- 2 335 742
- US-B1- 6 260 669
- US-B1- 6 536 564
- US-B1- 7 380 645

## Beschreibung

### Stand der Technik

Die Erfindung betrifft eine Bremsscheibe gemäß dem Oberbegriff des Anspruchs 1.

Eine derartige Bremsscheibe ist aus der DE 10 2008 016 037 A1 bekannt. Die bekannte Bremsscheibe ist als innenbelüftete Bremsscheibe mit zwischen zwei Reibringen angeordneten Kühlkanälen ausgebildet. Um die Wärmeableitung zu verbessern sind an der bekannten Bremsscheibe zusätzliche Luftleitelemente vorgesehen. Die Luftleitelemente dienen gleichzeitig noch der Befestigung des zentralen Bereichs der Bremsscheibe mit den den zentralen Bereich radial umgebenden Reibringen.

Aus der DE 195 05 014 A1 ist eine weitere Bremsscheibe bekannt. Die Luftleitelemente dieser Bremsscheibe sind auf der radial innen liegenden Seite der Reibringe in einer Ebene außerhalb der beiden Reibringe an einem Trägerabschnitt angeordnet. Dabei sind der Trägerabschnitt und einer der beiden Reibringe als ein einstückiges bzw. als gemeinsames Bauteil ausgebildet. Die bekannte Bremsscheibe weist ein relativ großes Bauvolumen, insbesondere eine relativ große Höhe bzw. Dicke auf. Dadurch, dass der Trägerabschnitt und einer der beiden Reibringe als ein einstückiges bzw. gemeinsames Bauteil insbesondere aus Gussmaterial ausgebildet sind, ist weiterhin das Gewicht der bekannten Bremsscheibe relativ hoch.

Ferner ist es beispielsweise aus der EP 0 680 571 B1 bekannt, Bremstopf und Reibring als separate Bauteile auszubilden, die über Verbindungselemente miteinander verbunden sind.

Aus der US 6,880,683 B1 und der DE 103 34 555 A1 sind weiterhin Luftleitelemente zur Verbesserung der Kühlleistung an Bremsscheiben von Zweirädern bekannt, wobei die Bremsscheiben jeweils nur einen einzigen Reibring umfassen.

### Offenbarung der Erfindung

Der Erfindung liegt die Aufgabe zugrunde, eine Bremsscheibe nach dem Oberbegriff des Anspruchs 1 derart weiterzubilden, dass diese bei mechanisch stabilem Aufbau gleichzeitig gute Kühleigenschaften aufweist. Diese Aufgabe wird mit einer Bremsscheibe mit den Merkmalen des Anspruchs 1 gelöst. Vorteilhafte Weiterbildungen der Erfindung sind in den Unteransprüchen angegeben.

Besonders vorteilhaft ist es weiterhin, Bremstopf und Reibring als separate, miteinander verbundene Bauteile auszubilden. Dadurch können das Gewicht der Bremsscheibe verringert, oder aber die mechanischen bzw. thermischen Eigenschaften optimiert werden.

Durch eine einstückige Anformung der Luftleitelemente am Bremstopf bzw. dem Reibring können die Luftleitelemente auf kostengünstige Art realisiert werden, wenn diese beispielsweise beim Gießen der Bauteile gleich mit angeformt werden.

Alternativ ist es möglich, die Luftleitelemente an einem separaten Trägerelement anzuordnen. Dadurch ist auf einfache Art und Weise beispielsweise eine hohe Variantenvielfalt bei Bremsscheiben durch verschiedene Arten von Luftleitelementen realisierbar, ohne dass Änderungen am Bremstopf oder dem Reibring erforderlich sind.

Durch eine Neigung der Luftleitelemente in oder entgegen der Drehrichtung der Bremsscheibe lässt sich in einfacher Art und Weise die Strömungsrichtung der Kühlluft beeinflussen und somit den jeweiligen Verhältnissen anpassen.

Weiterhin lässt sich durch eine Verwindung der Luftleitelemente in Art von Turbinenschaufeln der Wirkungsgrad bzw. die Kühlleistung erhöhen.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine erfindungsgemäße Bremsscheibe in einer perspektivischen Ansicht,
- Fig. 2 und 3:: jeweils vereinfachte Teilschnitte durch erfindungsgemäße Bremsscheiben und
- Fig. 4:: ein Luftleitelement, das bei einer erfindungsgemäßen Bremsscheibe zum Einsatz kommt in perspektivischer Ansicht.

In den Figuren sind gleiche Elemente und Elemente mit der gleichen Funktion mit den gleichen Bezugszeichen gekennzeichnet.

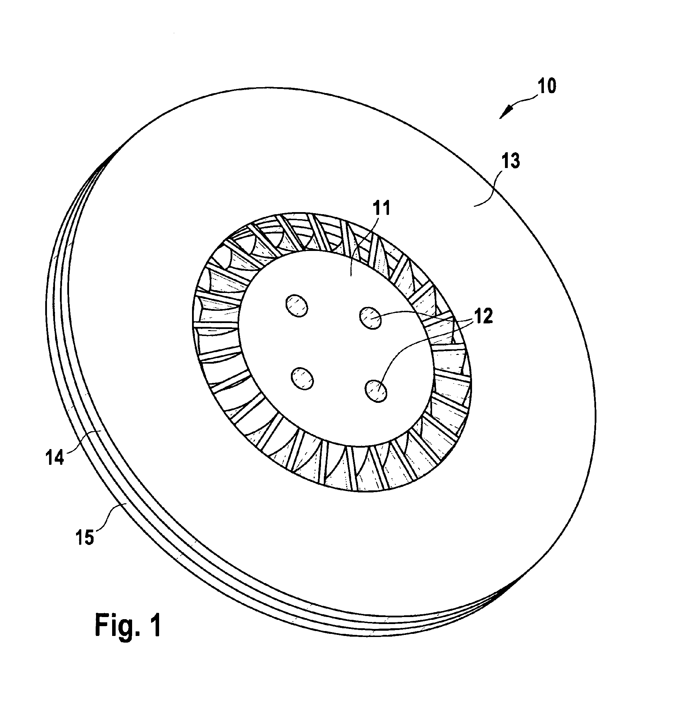

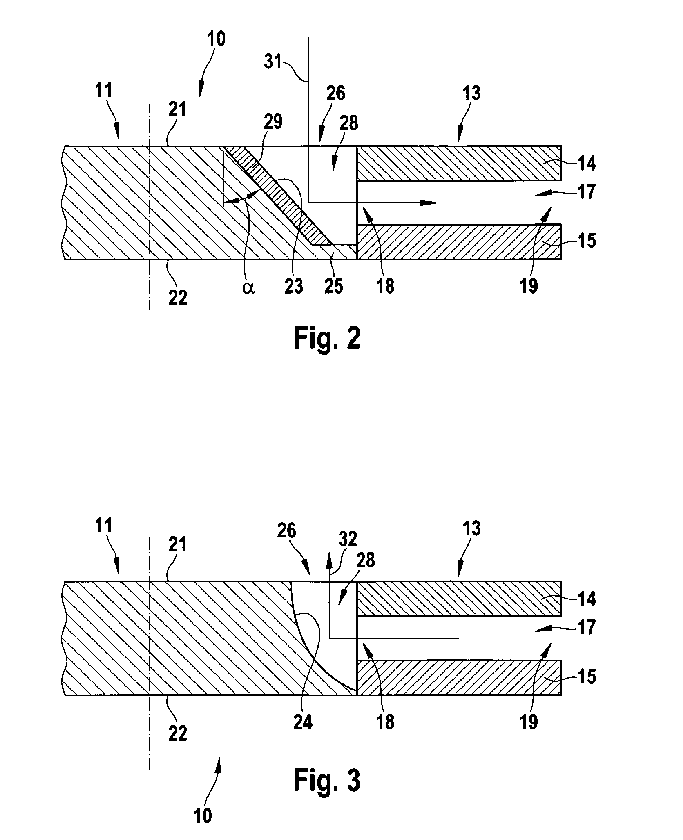

In der Fig. 1 ist eine innenbelüftete, Bremsscheibe 10 für ein Kraftfahrzeug dargestellt. Die Bremsscheibe 10 weist einen zentral angeordneten Bremstopf 11 auf, in dem beispielsweise vier Löcher 12 zur Befestigung der Bremsscheibe 10 an einer nicht dargestellten Nabe des Kraftfahrzeugs ausgebildet sind. Der Bremstopf 11 ist von einem Reibring 13 umgeben, der aus zwei Reibringhälften 14, 15 besteht. Die beiden parallel zueinander angeordneten Reibringhälften 14, 15 sind mittels nicht dargestellter Verbindungsstege in bekannter Art und Weise miteinander verbunden, wobei Kühlkanäle 17 zwischen den beiden Reibringhälften 14, 15 ausgebildet werden (Figuren 2 und 3). Die Kühlkanäle 17 verlaufen dabei sternförmig zwischen dem radial innen liegenden Bereich 18 und dem radial außen liegenden Bereich 19 des Reibrings 13. Die Reibringhälften 14, 15 wirken in bekannter Weise mit Bremsbelägen des Kraftfahrzeugs zusammen, wobei die aufgrund der Reibwärme in dem Reibring 13 erzeugte Wärme über die Kühlkanäle 17 teilweise aus dem Reibring 13 geleitet wird.

Wie insbesondere aus den Fig. 2 und 3 ersichtlich ist, weist der Bremstopf 11 auf der der Radnabe abgewandten Vorderseite 21 einen geringeren Durchmesser auf, als auf der der Radnabe zugewandten Rückseite 22. Dadurch ergibt sich eine kegelstumpfförmige Form des Bremstopfes 11 mit einer Seitenwand 23, 24. Entsprechend der Fig. 2 ist die Seitenwand 23 plan ausgebildet und weist gegenüber der Senkrechten einen Winkel α zwischen 10 Grad und 50 Grad auf. Bei der Seitenwand 24 gemäß der Fig. 3 ist die Seitenwand 23 demgegenüber konkav ausgebildet. Ferner erkennt man an den Fig. 2 und 3, dass die Rückseite 22 des Bremstopfes 11 bis an die eine Reibringhälfte 15 heranreicht bzw. mit dieser verbunden ist. Bei der Fig. 2 erfolgt dies mittels eines ringförmigen Zwischenbereichs 25 des Bremstopfes 11. Dadurch ergibt sich eine bevorzugt geschlossen ausgebildete Rückseite der Bremsscheibe 10.

Während der Reibring 13 bevorzugt aus Grauguss besteht, besteht der Bremstopf 11 entweder ebenfalls aus Grauguss, alternativ jedoch aus einem anderen Material, beispielsweise aus einer Aluminiumlegierung. Falls der Bremstopf 11 und der Reibring 13 aus demselben Material bestehen, kann die soweit beschriebene Bremsscheibe 10 durch einen einzigen Herstellschritt insbesondere durch Gießen hergestellt werden. Falls der Bremstopf 11 und der Reibring 13 als separate Bauteile ausgebildet sind, werden diese auf bekannte Art und Weise entweder direkt, oder mittels zusätzlicher Verbindungselemente miteinander verbunden, wie dies beispielsweise in der EP 0 680 571 B1 beschrieben ist.

Durch die kegelstumpfförmige Form des Bremstopfes 11 sowie die geschlossen ausgebildete Rückseite der Bremsscheibe 10 ist auf der der Radnabe abgewandten Seite der Bremsscheibe 10 eine ringförmige Öffnung 26 bzw. ein ringförmiger Aufnahmebereich ausgebildet. Wie insbesondere aus der Fig. 1 ersichtlich ist, sind in der Öffnung 26 turbinen- bzw. schaufelförmige Luftleitelemente 28 angeordnet. Dabei wirken die Luftleitelemente 28 derart mit den Kühlkanälen 17 in dem Reibring 13 zusammen, dass die Luftleitelemente 28 während der Fahrt des Kraftfahrzeugs gezielt Luftströme in die Kühlkanäle 17 fördern, um dadurch die die Bremsscheibe 10 kühlende Außenluft schneller zu- und abzuführen.

Die Luftleitelemente 28 können entweder schaufel- bzw. turbinenartig verdreht, oder aber gerade ausgebildet sein. Ferner können sie entweder in oder entgegen der Drehrichtung der Bremsscheibe 10 geneigt angeordnet werden.

Die bevorzugt in gleichen Winkelabständen zueinander angeordneten Luftleitelemente 28 können im Fall eines durch einen Gussvorgang hergestellten Bremstopfes 11 bevorzugt an dessen Seitenwand 24 gleich mit angeformt werden (Fig. 3). Es ist jedoch auch denkbar, die einzelnen Luftleitelemente 28 mittels separater Befestigungselemente oder aber mittels eines gemeinsamen Trägerrings 29 (Fig. 2), an dem die Luftleitelemente 28 befestigt oder angeformt sind, mit der Seitenwand 23 bzw. mit dem Reibring 13 zu verbinden.

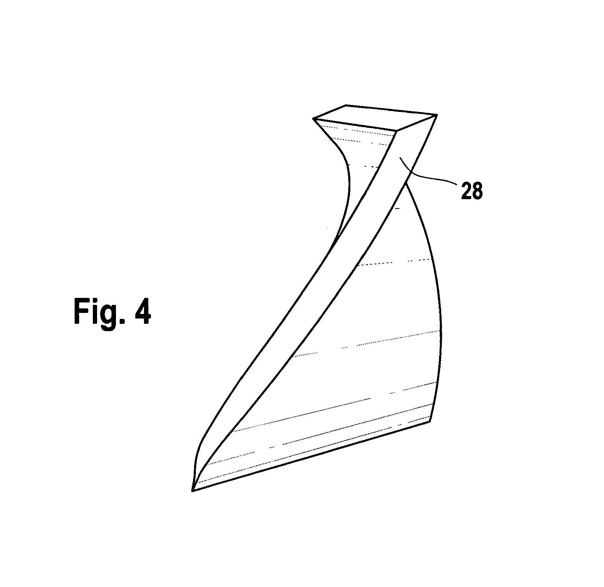

In der Figur 4 ist ein einzelnes, durch einen Extrusionsverfahren hergestelltes Luftleitelement 28 dargestellt, das spiralförmig verwunden ist. Dabei beträgt das Verhältnis zwischen dem Extrusionsabstand (das ist die Länge, bei der eine 360 Grad-Verwindung des Luftleitelements 28 erfolgt) und der Extrusionstiefe zwischen 1:4 und 1:8. Hierdurch kann eine geeignete Kühlung der Bremsscheibe 10 erzielt werden. Der Extrusionsabstand ist die notwendige Extrusionstiefe um eine Verschraubung/Verdrehung von 360° zu realisieren. Die Extrusionstiefe ist die Länge des Luftleitelements 28.

Die Luftleitelemente 28 weisen eine derartige Höhe auf, dass sie sich bevorzugt bis in die Ebene der Vorderseite 21 der Bremsscheibe 10 erstrecken bzw. mit der Vorderseite 21 bündig abschließen und somit die Höhe der Öffnung 26 vollständig ausnutzen. Weiterhin ist die Anordnung der Luftleitelemente 28 derart, dass sich die Kühlkanäle 17 zumindest teilweise in den Freiräumen zwischen den Luftleitelementen 28 befinden, um einen optimalen Durchtritt der Luft durch die Kühlkanäle 17 zu ermöglichen.

Durch die Form und Anordnung der einzelnen Luftleitelemente 28 lassen sich insbesondere die Strömungsrichtung und der Volumenstrom der Luft durch die Kühlkanäle 17 der Bremsscheibe 10 beeinflussen. So ist in der Fig. 2 der Fall dargestellt, bei der die Luft entsprechend des Pfeils 31 die Kühlkanäle 17 radial gesehen von innen nach außen durchströmen. Demgegenüber werden die Kühlkanäle 17 bei der Fig. 3 entsprechend dem Pfeil 32 radial gesehen von außen nach innen durchströmt.

## Patentansprüche

1. Bremsscheibe (10), insbesondere Scheibenbremse in einem Kraftfahrzeug, mit einem zentralen, mit einer Radnabe verbindbaren Element (11) und einem das zentrale Element (11) umgebenden Reibring (13), wobei der Reibring (13) zwei scheibenförmige Reibringhälften (14, 15) umfasst, zwischen denen Kühlkanäle (17) zur Kühlung des Reibrings (13) angeordnet sind, und mit Luftleitelementen (28) für die Kühlkanäle (17), wobei die Luftleitelemente (28) auf der radial innen liegenden Seite der Reibringhälften (14, 15) angeordnet sind, wobei die Luftleitelemente (28) zumindest teilweise in Höhe der Kühlkanäle (17) zwischen den Ebenen (21, 22) der Reibringhälften (14, 15) angeordnet sind, wobei das zentrale Element (11) und der Reibring (13) auf der der Radnabe zugewandten Ebene (22) eine zumindest nahezu geschlossene Fläche ausbilden, und wobei die Luftleitelemente (28) mit der der Radnabe abgewandten Ebene (21) bündig abschließen.
**dadurch gekennzeichnet,**
**dass** zwischen dem zentralen Element (11) und dem Reibringelement (13) ein ringförmiger Aufnahmebereich (26) zur Aufnahme der Luftleitelemente (28) ausgebildet ist, und dass die Luftleitelemente (28) nicht über die Reibringhälften (14, 15) hinausragen.

2. Bremsscheibe nach Anspruch 1,
**dadurch gekennzeichnet,**
**dass** das zentrale Element (11) eine kegelstumpfförmige Form mit einer Mantelfläche (23, 24) aufweist, dass die Mantelfläche (23, 24) gegenüber einer Senkrechten einen Winkel (α) von 10 Grad bis 50 Grad aufweist oder aber konkav ausgebildet ist, und dass die Luftleitelemente (28) zwischen der Mantelfläche (23, 24) und dem Reibring (13) angeordnet sind.

3. Bremsscheibe nach Ansprüche 1 und 2,
**dadurch gekennzeichnet,**
**dass** das zentrale Element (11) und das Reibringelement (13) als separate, miteinander verbundene Bauteile ausgebildet sind.

4. Bremsscheibe nach Anspruch 3,
**dadurch gekennzeichnet,**
**dass** das zentrale Element (11) und der Reibring (13) aus unterschiedlichen Materialien bestehen.

5. Bremsscheibe nach einem der Ansprüche 1 bis 4,
**dadurch gekennzeichnet,**
**dass** die Luftleitelemente (28) einstückig am zentralen Bereich (11) oder am Reibring (13) angeformt sind.

6. Bremsscheibe nach einem der Ansprüche 1 bis 5,
**dadurch gekennzeichnet,**
**dass** die Luftleitelemente (28) an einem Trägerelement (29) angeordnet sind und dass das Trägerelement (29) mit dem zentralen Element (11) oder mit dem Reibring (13) verbunden ist.

7. Bremsscheibe nach einem der Ansprüche 1 bis 6,
**dadurch gekennzeichnet,**
**dass** die Luftleitelemente (28) in oder entgegen der Drehrichtung der Bremsscheibe (10) geneigt angeordnet sind.

8. Bremsscheibe nach einem der Ansprüche 1 bis 7,
**dadurch gekennzeichnet,**
**dass** die Luftleitelemente (28) verwunden ausgebildet sind.

## Claims

1. Brake disc (10), in particular disc brake in a motor vehicle, having a central element (11) which can be connected to a wheel hub, and a friction ring (13) which surrounds the central element (11), the friction ring (13) comprising two disc-shaped friction-ring halves (14, 15), between which cooling channels (17) for cooling the friction ring (13) are arranged, and having air guiding elements (28) for the cooling channels (17), the air guiding elements (28) being arranged on the radially inner side of the friction-ring halves (14, 15), the air guiding elements (28) being arranged at least partially at the level of the cooling channels (17) between the planes (21, 22) of the friction-ring halves (14, 15), the central element (11) and the friction ring (13) forming an at least virtually closed surface on the plane (22) which faces the wheel hub, and the air guiding elements (28) terminating flushly with the plane (21) which faces away from the wheel hub, **characterized in that** an annular receiving region (26) for receiving the air guiding elements (28) is formed between the central element (11) and the friction-ring element (13), and **in that** the air guiding elements (28) do not project beyond the friction-ring halves (14, 15).

2. Brake disc according to Claim 1, **characterized in that** the central element (11) has a frustoconical shape with a circumferential face (23, 24), **in that** the circumferential face (23, 24) has an angle (α) of from 10 degrees to 50 degrees with respect to a perpendicular or else is of concave configuration, and **in that** the air guiding elements (28) are arranged between the circumferential face (23, 24) and the friction ring (13).

3. Brake disc according to Claims 1 and 2, **characterized in that** the central element (11) and the friction-ring element (13) are configured as separate components which are connected to one another.

4. Brake disc according to Claim 3, **characterized in that** the central element (11) and the friction ring (13) consist of different materials.

5. Brake disc according to one of Claims 1 to 4, **characterized in that** the air guiding elements (28) are formed integrally on the central region (11) or on the friction ring (13).

6. Brake disc according to one of Claims 1 to 5, **characterized in that** the air guiding elements (28) are arranged on a carrier element (29), and **in that** the carrier element (29) is connected to the central element (11) or to the friction ring (13).

7. Brake disc according to one of Claims 1 to 6, **characterized in that** the air guiding elements (28) are arranged such that they are inclined in or counter to the rotational direction of the brake disc (10).

8. Brake disc according to one of Claims 1 to 7, **characterized in that** the air guiding elements (28) are of twisted configuration.

## Revendications

1. Disque de frein (10), en particulier frein à disque dans un véhicule automobile, comprenant un élément central (11) pouvant être connecté à un moyeu de roue et un anneau de friction (13) entourant l'élément central (11), l'anneau de friction (13) comprenant deux moitiés d'anneau de friction (14, 15) en forme de disque, entre lesquelles sont disposés des canaux de refroidissement (17) pour refroidir l'anneau de friction (13), et comprenant des éléments de guidage d'air (28) pour les canaux de refroidissement (17), les éléments de guidage d'air (28) étant disposés sur le côté radialement interne des moitiés d'anneau de friction (14, 15), les éléments de guidage d'air (28) étant disposés au moins en partie à la hauteur des canaux de refroidissement (17) entre les plans (21, 22) des moitiés d'anneau de friction (14, 15), l'élément central (11) et l'anneau de friction (13) constituant une surface au moins presque fermée sur le plan (22) tourné vers le moyeu de roue, et les éléments de guidage d'air (28) se terminant en affleurement avec le plan (21) opposé au moyeu de roue,
**caractérisé en ce**
**qu'**entre l'élément central (11) et l'élément d'anneau de friction (13) est réalisée une région de réception de forme annulaire (26) pour recevoir les éléments de guidage d'air (28), et en ce que les éléments de guidage d'air (28) ne font pas saillie au-delà des moitiés d'anneau de friction (14, 15).

2. Disque de frein selon la revendication 1,
**caractérisé en ce que**
l'élément central (11) présente une forme tronconique avec une surface d'enveloppe (23, 24), **en ce que** la surface d'enveloppe (23, 24) présente par rapport à une verticale, un angle (α) de 10 degrés à 50 degrés ou peut aussi être réalisée sous forme concave, et **en ce que** les éléments de guidage d'air (28) sont disposés entre la surface d'enveloppe (23, 24) et l'anneau de friction (13).

3. Disque de frein selon les revendications 1 et 2,
**caractérisé en ce que**
l'élément central (11) et l'élément d'anneau de friction (13) sont réalisés sous forme de composants séparés connectés l'un à l'autre.

4. Disque de frein selon la revendication 3,
**caractérisé en ce que**
l'élément central (11) et l'anneau de friction (13) se composent de matériaux différents.

5. Disque de frein selon l'une quelconque des revendications 1 à 4,
**caractérisé en ce que**
les éléments de guidage d'air (28) sont façonnés d'une seule pièce sur la région centrale (11) ou sur l'anneau de friction (13).

6. Disque de frein selon l'une quelconque des revendications 1 à 5,
**caractérisé en ce que**
les éléments de guidage d'air (28) sont disposés sur un élément porteur (29) et **en ce que** l'élément porteur (29) est connecté à l'élément central (11) ou à l'anneau de friction (13).

7. Disque de frein selon l'une quelconque des revendications 1 à 6,
**caractérisé en ce que**
les éléments de guidage d'air (28) sont disposés de manière inclinée dans le sens ou à l'encontre du sens de rotation du disque de frein (10).

8. Disque de frein selon l'une quelconque des revendications 1 à 7,
**caractérisé en ce que**
les éléments de guidage d'air (28) sont réalisés sous forme tordue.
